# FASCICULE DE BREVET EUROPEEN

(11) **EP 3 615 368 B1**
(45) Date de publication et mention de la délivrance du brevet: **16.06.2021**
(21) Numéro de dépôt: 18723754.0
(22) Date de dépôt: 27.04.2018
(51) Int. Cl.: B60K 35/00, B60K 37/06, B60Q 3/00, B60Q 3/18, B60R 1/00, B60R 11/04, B60K 28/02, B60K 28/06, G06K 9/00, G06F 3/01, G02B 27/09, F21V 14/00, B60R 11/00

(54) **MODULE DE COMMANDE POUR HABITACLE DE VÉHICULE**
BEFEHLSMODUL FÜR FAHRZEUGINSASSENRAUM
COMMAND MODULE FOR VEHICLE PASSENGER COMPARTMENT

(30) Priorité: 28.04.2017 FR 1753782
(43) Date de publication de la demande: 04.03.2020
(73) Titulaire: Valeo Comfort and Driving Assistance, 94046 Créteil Cedex (FR)
(72) Inventeur: PETRUCCI, Antoine-Camille, 94046 Créteil Cedex (FR); GRULOIS, Tatiana, 94046 Créteil Cedex (FR); MERMILLOD, Pierre, 94046 Créteil Cedex (FR)
(74) Mandataire: Delplanque, Arnaud
(86) Numéro de dépôt international: PCT/EP2018/060977
(87) Numéro de publication internationale: WO 2018/197710

(56) Documents cités:
- DE-A1-102014 009 143
- US-A1- 2002 018 945
- US-A1- 2016 210 504

## Description

La présente invention concerne un module de commande tel qu'utilisé pour contrôler et régler des fonctions diverses, et en particulier pour un habitacle de véhicule
Un tel module de commande est connu du document US 2016/210504 A1.

Dans le cadre d'un module de commande à reconnaissance de geste ou pour surveiller l'état de vigilance d'un conducteur de véhicule automobile, il est connu d'utiliser des caméras, en particulier grand angle, reliées à une unité de contrôle qui identifie ou quantifie des caractéristiques du conducteur, du passager et éventuellement de gestes qu'ils effectuent.

Pour permettre aux caméras d'avoir une image suffisamment illuminée, des modules d'éclairage sont généralement associés aux caméras. Ces modules d'éclairage comportent une source de lumière, généralement une ou plusieurs diodes qui émettent de la lumière à une longueur d'onde située en dehors du spectre visible (infrarouge), et un réflecteur à surface libre (généralement parabolique tronqué) qui dirige le flux lumineux émis par la diode vers le champ de vision de la caméra.

Une caméra grand angle possède un champ de vision avec une ouverture angulaire maximale de l'ordre de 120 à 140 degrés, tandis qu'un module d'éclairage ne peut éclairer uniformément qu'un angle maximal de l'ordre de 70 à 80 degrés. L'adjonction de deux modules d'éclairage permet d'éclairer cet espace en totalité, mais des problèmes d'uniformité de l'éclairement surviennent aux frontières des espaces éclairés par chacun des modules d'éclairage, notamment au centre du champ de vision.

En particulier, par exemple dans le cadre d'une surveillance de l'état de vigilance du conducteur, l'analyse des images se fait par découpage de celles-ci par niveaux d'éclairement. La présence de différents niveaux d'éclairement peut alors engendrer des artefacts à l'interprétation, ou bien nécessite une compensation complexe.

En outre, les diodes utilisées présentent généralement des disparités d'éclairement dans un lot de même éclairement nominal, ce qui peut engendrer une disparité d'éclairage entre les moitiés gauche et droite du champ de vision de la caméra. Cette disparité peut de nouveau engendrer des artefacts à l'interprétation desdites images.

Afin de résoudre au moins partiellement le problème précédemment mentionné, l'invention a pour objet un module d'observation pour habitacle de véhicule, comportant :
∘ une caméra,
∘ deux modules d'éclairage, éclairant chacun une portion d'un champs de vision de la caméra,
caractérisé en ce que les modules d'éclairage éclairent chacun un domaine propre du champs de vision de la caméra, et tous les deux un domaine de recouvrement commun dudit champs de vision, situé entre les domaines propres,
les modules d'éclairage générant chacun :
- un éclairement uniforme à une valeur de référence, commune aux deux modules d'éclairage, dans leur domaine propre, et
- un éclairement décroissant continûment de la valeur de référence dans leur domaine propre à zéro dans le domaine propre de l'autre module d'éclairage,
de telle sorte que l'éclairement combiné des deux modules d'éclairage dans le domaine de recouvrement commun est constant et vaut la valeur de référence.

Le module d'éclairage permet d'obtenir, dans le cadre d'un module d'observation d'habitacle de véhicule à deux ou plus modules d'éclairage, un éclairement uniforme sur la totalité du champ de vision de la caméra.

Le module d'éclairage peut présenter une ou plusieurs des caractéristiques suivantes, prises seules ou en combinaison.

L'éclairement de chacun des modules d'éclairage descend linéairement de la valeur de référence à zéro sur le domaine de recouvrement.

La caméra est reliée à une unité de contrôle configurée pour isoler dans des images prises par la caméra un ou plusieurs gestes spécifiques exécutés par un utilisateur dans le champ de vision de la caméra.

La caméra est reliée à une unité de contrôle configurée pour isoler dans des images prises par la caméra un ou plusieurs indicateurs d'un niveau de vigilance d'un conducteur de véhicule automobile dans le champ de vision de la caméra.

Les indicateurs de niveau de vigilance du conducteur comprennent au moins un parmi les suivants : la direction du regard du conducteur, un état ouvert ou fermé des yeux du conducteur, une fréquence de clignement des yeux du conducteur, une fréquence de bâillement du conducteur.

L'invention a aussi pour objet le module d'éclairage pour module d'observation d'habitacle de véhicule automobile associé tel que défini ci-dessous, comprenant :
∘ une source lumineuse émettant un flux lumineux,
∘ un réflecteur dirigeant le flux lumineux émis par la diode électroluminescente en faisceau lumineux dirigé vers le champ de vision de la caméra,
caractérisé en ce qu'il comporte en outre :
∘ une plaque structurante, au moins partiellement transparente au faisceau lumineux, et disposée sur le passage du faisceau lumineux conique,
∘ des moyens de structuration du faisceau lumineux, disposés sur la plaque structurante,
les moyens de structuration étant configurés pour modifier la répartition spatiale de l'éclairement du faisceau lumineux issu du réflecteur par déviation ou atténuation de sorte que l'éclairement en aval de la plaque structurante est uniforme à la valeur de référence sur un domaine propre du module d'éclairage, et descend continûment de la valeur de référence dans le domaine propre à zéro selon une fonction prédéterminée.

L'éclairement peut alors en particulier descendre linéairement de la valeur de référence dans le domaine propre à zéro.

Les moyens de structuration portés par la plaque structurante peuvent comporter une matrice de cônes ou paraboloïdes tronqués, évasés en s'éloignant de la source lumineuse, présentant une surface amont et une surface aval dont les normales sont parallèles à un axe optique du module d'éclairage.

En alternative, les moyens de structuration de la plaque structurante peuvent comporter au moins un parmi les suivants : une ou plusieurs couches de peinture d'opacité variable, un gradient de teinture dans la masse, un dioptre courbe formant lentille, un ou plusieurs réseaux d'interférence.

Le réflecteur peut aussi être un réflecteur parabolique tronqué.

Enfin, l'invention se rapporte aussi à un procédé d'étalonnage de modules d'éclairage d'un habitacle automobile dans le cadre d'un module d'observation tel que décrit ci-dessus, caractérisé en ce qu'il comporte les étapes suivantes :
- mesure de l'éclairement émis par un premier module d'éclairage sur une portion de domaine propre dudit premier module d'éclairage,
- mesure de l'éclairement émis par le au moins un deuxième module d'éclairage sur une portion de domaine propre dudit deuxième module d'éclairage,
- diminution ou augmentation de la puissance d'alimentation de la source lumineuse d'un des modules d'éclairage lorsqu'une différence d'éclairement supérieure à une valeur de référence est constatée entre les éclairements du premier et du deuxième module d'éclairage dans leur domaine propre.

Il est alors possible d'obtenir un module d'observation avec un profil d'éclairement uniforme sur l'ensemble du champ de vision de la caméra.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre schématiquement un module de commande dans un habitacle de véhicule,
- la figure 2 montre schématiquement l'habitacle et le module d'observation en vue de dessus,
- la figure 3 montre schématiquement un module d'observation en coupe longitudinale,
- la figure 4 montre schématiquement un module d'éclairage en coupe longitudinale,
- les figures 5a, et 5b sont des graphes illustrant la répartition angulaire de l'éclairement en sortie d'un réflecteur et en sortie d'un module d'éclairage,
- les figures 5c et 5d montrent un exemple de moyens de structuration pour plaque structurante,
- les figures 6 et 7 illustrent la répartition de l'éclairement en combinant deux modules d'éclairage des figures précédentes,
- la figure 8 est un organigramme reprenant les principales étapes du procédé d'étalonnage associé au module d'observation à deux modules d'éclairage.

Sur toutes les figures, les mêmes références se rapportent aux mêmes éléments.

Les termes tels que « en amont », « en aval », « avant », « après » et équivalents utilisés ci-après sont définis par rapport au sens de propagation de la lumière, de la source à l'habitacle du véhicule.

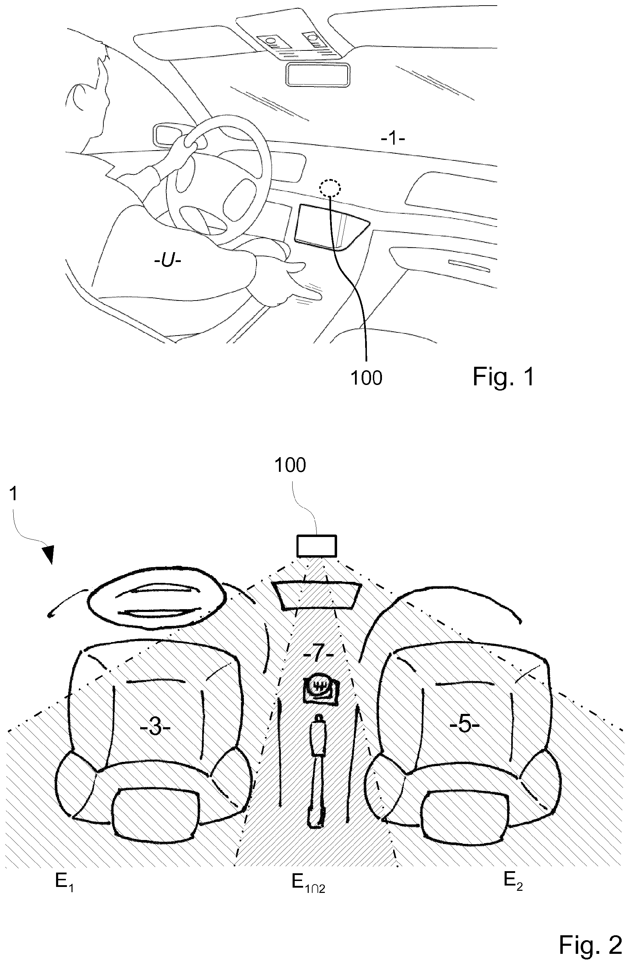

L'habitacle de véhicule 1 et le conducteur U sont représentés en figure 1.

Le conducteur U est dans le champ de vision d'un module d'observation 100 disposé ici au niveau de la console centrale du véhicule : la surface verticale ou inclinée située entre le passager et le conducteur U à l'avant de l'habitacle. En alternative, le module d'observation 100 peut être disposé au niveau d'un plafonnier ou d'un rétroviseur central de l'habitacle 1 du véhicule. Le module d'observation 100 peut être utilisé par exemple dans le cadre d'un module de commande à reconnaissance de geste.

Un tel module de commande à reconnaissance de geste permet la commande d'au moins une fonction d'un organe du véhicule automobile telle que la commande des fonctions d'un système de climatisation, d'un système audio, d'un système de téléphonie ou encore d'un système de navigation. Le module de commande peut également servir pour les commandes de lève-vitres, de positionnement des rétroviseurs extérieurs ou encore pour le déplacement de sièges motorisés ou pour commander des lumières intérieures, un verrouillage central, un toit ouvrant, les feux de détresse, les lumières d'ambiance ou le frein à main.

L'utilisateur U exécute des gestes dans un espace de détection du module de commande 100, et ledit module de commande 100 modifie alors les paramètres ou le fonctionnement des modules fonctionnels associés (autoradio, assistant de navigation, éclairage).

En alternative, le module d'observation 100 peut être intégré dans un module de surveillance du conducteur, qui établit des images du conducteur U, et utilise ces images pour établir un diagnostic de l'état de vigilance du conducteur U. Pour ce faire, une unité de traitement d'images du module peut par exemple établir une direction du regard du conducteur *U* (s'il regarde par une fenêtre ou dans l'habitacle), un état ouvert ou fermé de ses yeux, et une fréquence de bâillement et/ou de clignement des yeux pour évaluer un niveau de fatigue.

Le champ de vision d'un module d'observation 100 est représenté plus en détail en figure 2.

La figure 2 montre l'habitacle du véhicule et donc le module de commande 100 en vue de dessus. La figure 2 montre plus en détail l'habitacle 1 du véhicule en vue de dessus, avec les différentes portions de l'espace de détection et/ou d'observation. L'espace d'observation est divisé en trois parties *E₁, E₂, E*_{*1*∩}*₂.*

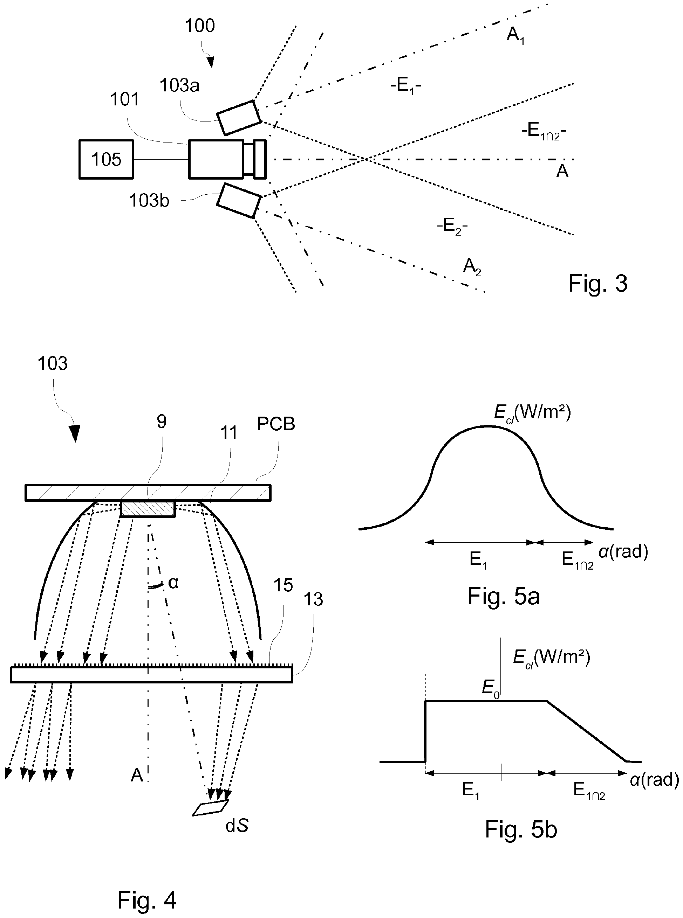

Les deux parties *E₁, E₂* correspondent à des espaces propres illuminés chacun par un seul module d'éclairage (103a, 103b en figure 3), et la partie E_{*1*n2} correspond à un espace de recouvrement, la partie éclairée conjointement par les deux modules d'éclairage 103a, 103b .

La première partie *E₁* de l'espace de détection est approximativement située au niveau du siège conducteur 3, la seconde partie *E₂* est située au niveau du siège passager 5. La partie de recouvrement *E*_{*1*∩*2*} est située entre les deux précédentes, au niveau de la console centrale 7, vers le levier de vitesse et le frein à main.

Le module d'observation 100 est montré plus en détail en figure 3.

En figure 3 on peut voir que le module d'observation 100 comporte une caméra 101, en particulier une caméra grand angle, et deux modules d'éclairage 103a, 103b. À chaque espace propre *E₁, E₂* de l'espace d'observation est associé respectivement un des modules d'éclairage 103a, 103b.

La caméra 101 présente un axe optique *A*, qui définit avec la verticale un plan de symétrie pour le module d'observation 100. Les modules d'éclairage 103a, 103b présentent des axes optiques *A*₁ *A*₂ qui sont dirigés vers le centre de leurs parties d'espace éclairé respectives *E*₁*, E*₂, intersection *E*_{*1*∩*2*} comprise, et forment donc un angle non-nul avec l'axe optique *A* de la caméra 101.

En particulier, avec un module d'éclairage 103a ayant un angle d'éclairage de l'ordre de 70 à 80°, l'angle entre son axe optique *A*₁ et l'axe optique *A* de la caméra optique est de l'ordre de 5° à 30°, en particulier de 15 à 20°.

La caméra 101 est reliée à une unité de contrôle 105, configurée pour analyser les images produites par la caméra 101. L'unité de contrôle 105 comporte en particulier des moyens de calcul, tels qu'un ou plusieurs processeurs, et au moins une mémoire électronique qui sont soit dédiés soit intégrés et partagés dans un réseau électronique global du véhicule.

L'unité de contrôle 105 peut en particulier contrôler l'alimentation et le fonctionnement de différents équipements du véhicule au moyen de transistors, de microprocesseurs et/ou de circuits intégrés appliqués spécifiques (ASIC « application specific integrated circuits »).

Dans le cadre d'un module de contrôle à reconnaissance de geste, l'unité de contrôle 105 analyse les images pour y reconnaître des parties du corps d'un utilisateur *U* (conducteur ou passager), telles que ses bras et ses mains, et analyse les gestes effectués par ces parties du corps pour identifier des gestes spécifiques correspondant à des commandes spécifiques (balayage vertical ou horizontal, cercles, carrés, croix etc.). L'unité de contrôle adapte alors le fonctionnement des modules fonctionnels du véhicule contrôlés par le module de contrôle.

Dans le cadre d'un module d'évaluation de l'attention d'un conducteur, l'unité de contrôle 105 analyse les images issues de la caméra 101 pour identifier des indicateurs du niveau d'attention que porte le conducteur à son entourage. Ces marqueurs peuvent comprendre un état ouvert ou fermé de ses yeux, une fréquence de bâillement et/ou de clignement des yeux indiquant un niveau de fatigue.

L'unité de contrôle 105 peut alors, par exemple, soit déclencher l'émission un son strident destiné à réveiller le conducteur, l'affichage d'un message sécuritaire sur un écran ou déclencher la lecture d'un message sécuritaire par le dispositif multimédia du véhicule, faire clignoter l'éclairage intérieur du véhicule, et en particulier inviter le conducteur à effectuer une pause dans sa conduite ou à passer le volant à un passager.

Les dimensions (largeur et hauteur) du module d'observation 100 sont de l'ordre de quelques centimètres (cm), la distance aux objets observés dans l'habitacle 1 et de l'ordre de plusieurs dizaines de centimètres, typiquement 25cm à 1m, on peut donc considérer ledit module d'observation 100 comme étant ponctuel, les cônes correspondant au champ de vision de la caméra 101 et aux champ éclairés par les modules d'éclairage 103a, 103b peuvent alors être considérés comme ayant un sommet commun.

Les modules d'éclairage 103a, 103b éclairent alors chacun un des domaines propres *E₁* et *E₂* et tous deux le domaine de recouvrement *E*_{*1*∩*2*} situé entre les deux domaines propres *E₁* et *E*₂. Dans l'approximation de sommet commun des cônes, ces domaines sont des domaines angulaires.

Un module d'éclairage 103 est montré schématiquement en coupe en figure 4.

Le module d'éclairage 103 représenté est utilisé pour chacun des modules d'éclairage 103a et 103b de la figure 3.

Le module d'éclairage 103 comporte une source lumineuse ici sous forme de diode électroluminescente 9 placée sur un circuit imprimé *PCB.* La diode électroluminescente 9 est disposée dans un réflecteur 11, en particulier un réflecteur à forme libre (« free form ») en partant d'une forme parabolique tronquée, qui dirige le flux lumineux produit par la diode électroluminescente 9 vers le champ de vision de la caméra 101 en faisceau conique, par exemple pyramidal à base rectangulaire, le long de l'axe optique *A* du module d'éclairage 103.

La diode électroluminescente 9 est en particulier une diode infrarouge, émettant de la lumière dans le domaine infrarouge, ce qui permet d'éclairer l'habitacle de façon imperceptible par le conducteur *U.* On évite ainsi l'émission de lumière potentiellement dérangeante lors de la conduite de nuit.

Le module d'éclairage 103 comporte en outre une plaque structurante 13, disposée sur le trajet du faisceau lumineux issu du réflecteur 11. La plaque structurante 13 est une plaque en matériau au moins partiellement transparent à la gamme spectrale de la lumière émise par la diode électroluminescente 9. La plaque structurante 13 est par exemple réalisée en plastique dur, tel que le polycarbonate, par moulage.

La plaque structurante 13 comporte des moyens de structuration 15 du faisceau lumineux modifiant la répartition spatiale, ici angulaire, du flux lumineux issu du réflecteur 11.

Ces moyens de structuration 15 peuvent en particulier comporter des couches de peinture d'opacité variable, un gradient de teinture dans la masse avec un pigment diffusant la lumière dans la gamme spectrale de la diode 9, un dioptre courbe formant lentille, un ou plusieurs réseaux d'interférence.

Les moyens de structuration 15 de la plaque de structuration 13 modifient par déviation ou diminution des rayons du flux lumineux issu du réflecteur 11 la répartition spatiale de l'intensité lumineuse. La figure 4 comporte aussi le trajet de plusieurs rayons lumineux issus de la diode 9, représentés en pointillés.

Les figures 5a et 5b illustrent la modification de la répartition angulaire de l'intensité lumineuse.

Les figures 5a et 5b sont des graphes illustrant l'éclairement *E_{cl}*, en Watt par mètre carré (W/m²), reçu par un élément de surface *dS* à une distance constante de la diode 9 et faisant face celle-ci, situé à un angle d'observation α en radians (rad) considéré par rapport à l'axe optique *A* du module d'éclairage 103.

La figure 5a représente la répartition de l'éclairement *E_{cl}* en sortie du réflecteur 11, en amont de la plaque structurante 13. Les domaines angulaire correspondant aux portions de champ de vision *E₁* et *E*_{1∩2} sont représentées en dessous de l'axe des abscisses.

L'éclairement *E_{cl}* décrit une courbe symétrique de type gaussienne autour de l'axe des ordonnées, illustrant une répartition en sortie de réflecteur 11 classique. Le réflecteur 11 peut en particulier être rendu asymétrique pour permettre un décalage de la courbe selon les besoins du dispositif d'éclairage 103. La forme générale, la réflectivité, la courbure, la longueur totale et la hauteur de troncature du réflecteur 11 peuvent être utilisés pour façonner préalablement et grossièrement le faisceau lumineux en amont de la plaque structurante 13.

La figure 5b représente la répartition de l'éclairement *E_{cl}* en aval de la plaque structurante 13.

L'éclairement *E_{cl}* est en particulier nul en dehors des portions de champ de vision *E₁, E*_{*1*∩}*₂,* ce qui peut être réalisé en appliquant un cadre opaque aux infrarouges utilisés. L'éclairement *E_{cl}* est constant à une valeur de référence *E*₀ sur la portion de champ de vision propre *E₁,* et décroît dans le présent exemple linéairement de la valeur *E*₀ à zéro sur la portion de champ de vision de recouvrement *E*_{*1*∩}*₂.*

La courbe représentative de éclairement *E_{cl}* décrit donc, en partant de l'extrémité gauche (côté bord de champ de vision de la caméra 101) une marche en entrant dans le domaine du domaine angulaire propre *E₁,* passant de zéro à la valeur *E*₀, puis présente un plateau horizontal sur l'ensemble dudit domaine *E₁* à la valeur de référence *E*₀. Lors de l'entrée dans le domaine angulaire de recouvrement *E*_{*1*∩2}, la courbe fléchit et descend vers la valeur zéro de façon linéaire avec une pente descendante constante, et atteint la valeur zéro à la limite du domaine angulaire de recouvrement *E*_{*1*∩2} éloignée du domaine angulaire propre *E₁.*

En alternative, l'éclairement *E_{cl}* d'un module d'éclairage 103 peut descendre continûment de la valeur de référence *E₀*, adoptée dans son domaine propre *E₁*, à zéro dans le domaine propre *E₁* de l'autre module d'éclairage 103 associé au module d'observation 100, selon une fonction déterminée *f*(α). Le module d'éclairage associé générera alors un éclairement croissant en *E₀* - *f*(α) sur le domaine de recouvrement *E*_{*1*∩}*₂.*

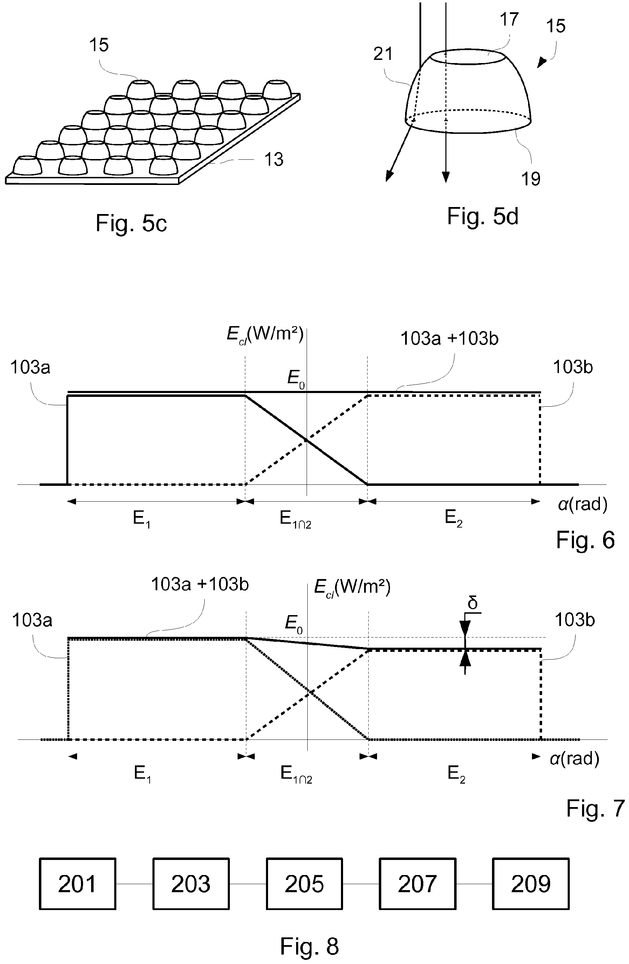

Cette modification de l'éclairement *E_{cl}* selon un profil angulaire, ou plus généralement spatial, maîtrisé se fait par exemple en utilisant une plaque structurante 13 et des moyens de structuration 15 tels que décrits en figures 5c et 5d.

La figure 5c est une vue en perspective schématique d'une portion de plaque structurante 13. La plaque structurante 13 est par exemple réalisée en polycarbonate, éventuellement teinté dans le domaine optique observable (400 à 800nm), et transparent dans le domaine spectral utilisé pour la diode 9, ici les infrarouges.

La plaque structurante 13 porte une matrice de moyens de structuration 15, réalisés sous forme de cônes ou paraboloïdes tronqués, disposés en particulier en damier ou quinconce, évasés en s'éloignant de la diode 9.

Les moyens de structuration 15 peuvent en particulier venir de matière avec la plaque structurante 13, par exemple lors du moulage par injection de ladite plaque structurante 13.

Un tel moyen de structuration 15 sous forme de paraboloïde tronqué est montré plus en détail en figure 5d.

En figure 5d, on voit que le moyen de structuration 15 présente une surface amont 17 et une surface aval 19 (ou base), dont les normales sont parallèles à l'axe optique *A,* ainsi qu'une surface latérale 21 ou jupe, paraboloïde de révolution dans le mode de réalisation de la figure 5d.

Le rapport entre les surfaces amont 17 et aval 19 est compris entre 20 % et 40 %, en particulier, il est autour de 30 %. La hauteur du paraboloïde tronqué est égale à environ la moitié du diamètre ou de l'extension maximale de la surface aval 19.

Deux rayons lumineux sont représentés en figure 5d, initialement parallèles à l'axe optique *A* et dirigés de haut en bas dans la représentation de la figure 5d.

L'un des rayons passe par la surface amont 17 qu'il rencontre avec un angle d'incidence nul. Il la traverse donc sans déviation par réfraction. Il traverse ensuite le paraboloïde et ressort par la surface aval 19 qu'il rencontre à nouveau avec un angle d'incidence nul. Il la traverse donc sans déviation par réfraction. Le premier rayon traverse donc le paraboloïde de part en part sans déviation.

Le deuxième rayon rencontre le paraboloïde par sa surface latérale 21 qu'il rencontre avec un angle d'incidence non nul. Le rayon est donc dévié par réfraction à l'entrée dans le paraboloïde. Le rayon atteint ensuite la surface aval 19 que, du fait de la déviation à l'entrée dans le paraboloïde, il rencontre avec un angle d'incidence non nul. Il est donc à nouveau dévié à sa sortie du paraboloïde. Le deuxième rayon considéré est donc dévié de sa trajectoire lors de sa traversée du paraboloïde.

En modifiant les dimensions des paraboloïdes (rapport des surfaces 17, 19, hauteur totale, hauteur de troncature, diamètre de la base 19, surface génératrice ovale ou polygonale au lieu de circulaire), l'indice de réfraction du matériau qui les compose, la courbure de la parabole génératrice de leur surface latérale 21 et la répartition (motif et densité) desdits paraboloïdes sur la plaque structurante 13, on peut répartir de façon contrôlée le faisceau lumineux généré par la diode 9 dans le champs de vision de la caméra 101. Il est alors en particulier possible d'obtenir un profil d'éclairement *E_{cl}* tel que décrit en figure 5b.

La figure 6 illustre l'éclairement *E_{cl}* observé en combinant deux modules d'éclairage 103a, 103b, avec une intensité lumineuse maximale à la valeur de référence *E*₀ commune, avec leur portions en pente constante se recouvrant, ce qui définit le domaine de recouvrement *E*_{*1*∩}*₂.*

La pente descendante pour le premier module d'éclairage 103a et montante pour le deuxième module d'éclairage 103b dans le domaine de recouvrement permettent d'assurer une intensité lumineuse totale constante à la valeur de référence *E*₀ sur la totalité du champ de vision de la caméra 101, recouvert par les trois domaines *E₁, E*_{*1*∩*2*}, *E₂.*

La figure 7 illustre un cas plus proche de la réalité, avec le premier module d'éclairage 103a ayant une intensité maximale à *E*₀ et le second module d'éclairage 103b ayant une intensité maximale inférieure à *E*₀ - δ, avec δ la différence d'intensité lumineuse maximale.

La courbe d'éclairement *E_{cl}* total se présente alors sous forme d'un premier plateau à la valeur *E*₀ sur l'ensemble du premier domaine angulaire propre *E₁* , d'une pente descendante de *E*₀ à *E*₀ - δ dans le domaine angulaire de recouvrement *E*_{1∩2}, et d'un deuxième plateau à la valeur *E*₀ - δ dans le deuxième domaine angulaire propre *E₁*.

Si la différence d'intensité lumineuse δ est de valeur absolue trop importante, un procédé d'étalonnage 200 tel que représenté en figure 8 peut être appliqué.

La figure 8 est un organigramme représentant les principales étapes du procédé 200.

La première étape 201 est la mesure de l'intensité lumineuse émise par le premier module d'éclairage 103a sur sa portion de domaine angulaire propre *E₁* de sorte à établir une valeur de référence.

Lors de la deuxième étape 203, l'éclairement *E_{cl}* émis par le deuxième module d'éclairage 103b sur sa portion de domaine angulaire propre *E₂* est mesuré.

Lors de la troisième étape 205, les éclairements *E_{cl}* dans les deux domaines propres *E₁, E₂* sont comparés pour établir la différence δ. Si la différence est supérieure à une tolérance maximale, définie par les propriétés de la caméra 101 et des procédés de traitement d'image appliqués par l'unité de contrôle, on procède à l'étape suivante 207 à une diminution ou augmentation de la puissance d'alimentation de la source de lumière 9 du deuxième module d'éclairage 103b, par exemple par addition d'une résistance de valeur adaptée sur le circuit d'alimentation de la diode 9, pour amener la différence d'éclairement δ dans une plage de valeurs acceptables.

Une éventuelle étape supplémentaire 209 de vérification de l'uniformité de l'éclairement *E_{cl}* est ensuite appliquée, en particulier en répétant les étapes 201 et 203 de mesure des intensités dans les domaines angulaires propres *E₁, E*₂.

En procédant à l'étalonnage 200 sur les modules d'éclairage 103a, 103b les éventuelles disparités des plaques structurantes 13 (épaisseur, transparence) peuvent être compensées en même temps que celles issues des différences de puissance des diodes électroluminescentes 9.

L'invention permet donc d'obtenir un éclairage plus uniforme sur l'ensemble du champ de vision d'une caméra 101 au moyen de deux modules d'éclairage 103a, 103b, avec recouvrement partiel de leurs champ d'éclairage.

On peut remarquer aussi que dans le module d'observation 100, les modules d'éclairage 103a, 103b réalisés avec une descente d'éclairement *E_{cl}* linéaire sont structurellement identiques, l'un étant simplement inversé au montage. La fabrication et le transport des modules d'éclairage 103a, 103b et de leurs composants s'en trouve simplifié, et le coût attendu s'en trouve ainsi réduit.

## Revendications

1. Module d'observation pour habitacle de véhicule, comportant :
une caméra (101),
deux modules d'éclairage (103a, 103b), éclairant chacun une portion d'un champs de vision de la caméra (101),
les modules d'éclairage (103a, 103b) éclairant chacun un domaine propre (*E₁, E₂*) du champs de vision de la caméra (101), et tous les deux un domaine de recouvrement (*E*_{1∩*2*}) commun dudit champs de vision, situé entre les domaines propres (*E₁, E₂*) **caractérisé en ce que** les modules d'éclairage (103a, 103b) génèrent chacun:
• un éclairement uniforme à une valeur de référence (*E*₀), commune aux deux modules d'éclairage (103a, 103b), dans leur domaine propre (*E₁, E₂*), et
• un éclairement décroissant continûment de la valeur de référence (*E*₀) dans leur domaine propre (*E₁, E₂*) à zéro dans le domaine propre (*E₁, E₂*) de l'autre module d'éclairage (103a, 103b),
de telle sorte que l'éclairement combiné des deux modules d'éclairage (103a, 103b) dans le domaine de recouvrement (*E*_{1∩*2*}) commun est constant et vaut la valeur de référence (*E*₀).

2. Module d'observation selon la revendication 1, **caractérisé en ce que** l'éclairement de chacun des modules d'éclairage (103a, 103b) descend linéairement de la valeur de référence (*E*₀) à zéro sur le domaine de recouvrement (*E*_{*1*∩2}).

3. Module d'observation selon la revendication 1 ou 2, **caractérisé en ce que** la caméra (101) est reliée à une unité de contrôle (105) configurée pour isoler dans des images prises par la caméra (101) un ou plusieurs gestes spécifiques exécutés par un utilisateur (*U*) dans le champ de vision de la caméra (101).

4. Module d'observation selon l'une des revendications précédentes, **caractérisé en ce que** la caméra est reliée à une unité de contrôle (105) configurée pour isoler dans des images prises par la caméra (101) un ou plusieurs indicateurs d'un niveau de vigilance d'un conducteur (*U*) de véhicule automobile dans le champ de vision de la caméra (101).

5. Module d'observation selon la revendication précédente, **caractérisé en ce que** les indicateurs de niveau de vigilance du conducteur (*U*) comprennent au moins un parmi les suivants : la direction du regard du conducteur, un état ouvert ou fermé des yeux du conducteur, une fréquence de clignement des yeux du conducteur, une fréquence de bâillement du conducteur.

6. Module d'éclairage pour module d'observation (100) d'habitacle de véhicule automobile selon l'une des revendications 1 à 5, comprenant :
∘ une source lumineuse (9) émettant un flux lumineux,
∘ un réflecteur (11) dirigeant le flux lumineux émis par la diode électroluminescente (9) en faisceau lumineux dirigé vers le champ de vision de la caméra (101),
**caractérisé en ce qu'**il comporte en outre :
∘ une plaque structurante (13), au moins partiellement transparente au faisceau lumineux, et disposée sur le passage du faisceau lumineux conique,
∘ des moyens de structuration (15) du faisceau lumineux, disposés sur la plaque structurante (13),
les moyens de structuration (15) étant configurés pour modifier la répartition spatiale de l'éclairement du faisceau lumineux issu du réflecteur (11) par déviation ou atténuation de sorte que l'éclairement en aval de la plaque structurante (13) est uniforme à la valeur de référence (*E*₀) sur un domaine propre (*E₁, E₂*) du module d'éclairage, et descend continûment de la valeur de référence (*E*₀) dans le domaine propre (*E₁, E₂*) à zéro selon une fonction prédéterminée.

7. Module d'éclairage selon la revendication 6, **caractérisé en ce que** l'éclairement descend linéairement de la valeur de référence (*E*₀) dans le domaine propre (*E₁, E₂*) à zéro.

8. Module d'éclairage selon la revendication 6 ou 7, **caractérisé en ce que** les moyens de structuration (15) portés par la plaque structurante (13) comportent une matrice de cônes ou paraboloïdes tronqués, évasés en s'éloignant de la source lumineuse (9), présentant une surface amont (17) et une surface aval (19) dont les normales sont parallèles à un axe optique (A) du module d'éclairage.

9. Module d'éclairage selon la revendication 6 ou 7, **caractérisé en ce que** les moyens de structuration (15) de la plaque structurante (13) comportent au moins un parmi les suivants : une ou plusieurs couches de peinture d'opacité variable, un gradient de teinture dans la masse, un dioptre courbe formant lentille, un ou plusieurs réseaux d'interférence.

10. Module d'éclairage selon l'une des revendications 6 à 9, **caractérisé en ce que** le réflecteur (11) est un réflecteur parabolique tronqué.

11. Procédé d'étalonnage de modules d'éclairage d'un habitacle automobile pour module d'observation pour habitacle de véhicule, comportant :
∘ une caméra (101),
∘ deux modules d'éclairage (103a, 103b), éclairant chacun une portion d'un champs de vision de la caméra (101),
dans lequel les modules d'éclairage (103a, 103b) éclairent chacun un domaine propre (*E₁, E₂*) du champs de vision de la caméra (101), et tous les deux un domaine de recouvrement (*E*_{1∩*2*}) commun dudit champs de vision, situé entre les domaines propres (*E₁, E₂*) **caractérisé en ce que**
les modules d'éclairage (103a, 103b) générant chacun :
∘ un éclairement uniforme à une valeur de référence (*E*₀) commune aux deux modules d'éclairage (103a, 103b), dans leur domaine propre, et
∘ un éclairement décroissant continûment de la valeur de référence (*E*₀) dans leur domaine propre (*E₁, E₂*) à zéro dans le domaine propre (*E₁, E₂*) de l'autre module d'éclairage (103a, 103b),
de sorte que l'éclairement combiné des deux modules d'éclairage (103a, 103b) dans le domaine de recouvrement (*E*_{1∩*2*}) est constant et vaut la valeur de référence (*E*₀), le procédé comportant les étapes suivantes :
• mesure de l'éclairement émis par un premier module d'éclairage (103a) sur une portion de domaine propre (*E₁*) dudit premier module d'éclairage (103a),
• mesure de l'éclairement émis par le au moins un deuxième module d'éclairage (103b) sur une portion de domaine propre (*E₂*) dudit deuxième module d'éclairage (103b),
• diminution ou augmentation de la puissance d'alimentation de la source lumineuse (9) d'un des modules d'éclairage (103a, 103b) lorsqu'une différence (δ) d'éclairement supérieure à une valeur de référence est constatée entre les éclairements du premier et du deuxième module d'éclairage (103a, 103b) dans leur domaine propre (*E₁, E₂*).

## Patentansprüche

1. Beobachtungmodul für eine Fahrgastzelle eines Fahrzeugs, aufweisend:
- eine Kamera (101),
- zwei Beleuchtungsmodule (103a, 103b), die jeweils einen Teilbereich eines Sichtfelds der Kamera (101) beleuchten,
wobei die Beleuchtungsmodule (103a, 103b) jeweils einen eigenen Bereich (*E*₁, *E*₂) des Sichtfelds der Kamera (101) und alle beide einen gemeinsamen Abdeckungsbereich (*E*_{1∩2}) des Sichtfelds, der sich zwischen den eigenen Bereichen (*E*₁, *E*₂) befindet, beleuchten, **dadurch gekennzeichnet, dass** die Beleuchtungsmodule (103a, 103b) jeweils Folgendes erzeugen:
• eine gleichförmige Beleuchtung auf einem Referenzwert (E₀), der den zwei Beleuchtungsmodulen (103a, 103b) gemein ist, in ihrem eigenen Bereich (*E*₁, *E*₂), und
• eine Beleuchtung, die vom Referenzwert (*E*₀) in ihrem eigenen Bereich (*E*₁, *E*₂) durchgehend auf null im eigenen Bereich (*E*₁, *E*₂) des anderen Beleuchtungsmoduls (103a, 103b) abnimmt,
so dass die kombinierte Beleuchtung der zwei Beleuchtungsmodule (103a, 103b) im gemeinsamen Abdeckungsbereich (*E*_{1∩2}) konstant ist und den Wert des Referenzwerts (*E*₀) aufweist.

2. Beobachtungsmodul nach Anspruch 1, **dadurch gekennzeichnet, dass** die Beleuchtung jedes der Beleuchtungsmodule (103a, 103b) auf dem Abdeckungsbereich (*E*_{1∩2}) linear vom Referenzwert (*E*₀) auf null abfällt.

3. Beobachtungsmodul nach Anspruch 1 oder 2, **dadurch gekennzeichnet, dass** die Kamera (101) mit einer Steuereinheit (105) verbunden ist, die dazu ausgebildet ist, in Bildern, die von der Kamera (101) aufgenommen werden, eine oder mehrere spezifische Gesten zu isolieren, die von einem Benutzer (*U*) im Sichtfeld der Kamera (101) ausgeführt werden.

4. Beobachtungsmodul nach einem der vorhergehenden Ansprüche, **dadurch gekennzeichnet, dass** die Kamera mit einer Steuereinheit (105) verbunden ist, die dazu ausgebildet ist, in Bildern, die von der Kamera (101) aufgenommen werden, einen oder mehrere Indikatoren eines Wachsamkeitsniveaus eines Kraftfahrzeugfahrers (*U*) im Sichtfeld der Kamera (101) zu isolieren.

5. Beobachtungsmodul nach dem vorhergehenden Anspruch, **dadurch gekennzeichnet, dass** die Indikatoren des Wachsamkeitsniveaus des Fahrers (*U*) mindestens eins von Folgendem umfassen: die Blickrichtung des Fahrers, einen offenen oder geschlossenen Zustand der Augen des Fahrers, eine Blinzelhäufigkeit der Augen des Fahrers, eine Häufigkeit des Gähnens des Fahrers.

6. Beleuchtungsmodul für ein Beobachtungsmodul (100) einer Fahrgastzelle eines Kraftfahrzeugs nach einem der Ansprüche 1 bis 5, umfassend:
- eine Lichtquelle (9), die einen Lichtstrom abgibt,
- einen Reflektor (11), der den Lichtstrom, der von der Leuchtdiode (9) abgegeben wird, in einem Lichtbündel leitet, das zum Sichtfeld der Kamera (101) gerichtet ist, **dadurch gekennzeichnet, dass** es ferner Folgendes aufweist:
- eine Strukturplatte (13), die für das Lichtbündel wenigstens teilweise transparent ist und auf dem Weg des kegelförmigen Lichtbündels angeordnet ist,
- Mittel zur Strukturierung (15) des Lichtbündels, die auf der Strukturplatte (13) angeordnet sind,
wobei die Strukturierungsmittel (15) dazu ausgebildet sind, die räumliche Verteilung der Beleuchtung des Lichtbündels vom Reflektor (11) durch Umleitung oder Dämpfung so zu verändern, dass die stromabwärtige Beleuchtung der Strukturplatte (13) gleichförmig auf dem Referenzwert (*E*₀) auf einem eigenen Bereich (*E*₁, *E*₂) des Beleuchtungsmoduls ist und gemäß einer vorbestimmten Funktion durchgehend vom Referenzwert (*E*₀) im eigenen Bereich (*E*₁, *E*₂) auf null abfällt.

7. Beleuchtungsmodul nach Anspruch 6, **dadurch gekennzeichnet, dass** die Beleuchtung vom Referenzwert (*E*₀) im eigenen Bereich (*E*₁, *E*₂) linear auf null abfällt.

8. Beleuchtungsmodul nach Anspruch 6 oder 7, **dadurch gekennzeichnet, dass** die Strukturierungsmittel (15), die von der Strukturplatte (13) getragen werden, eine Matrix aus Kegeln oder Paraboloidstümpfen aufweisen, die mit der Entfernung von der Lichtquelle (9) weiter werden, die eine stromaufwärtige Fläche (17) und eine stromabwärtige Fläche (19) aufweisen, deren Normalen parallel zu einer optischen Achse (*A*) des Beleuchtungsmoduls verlaufen.

9. Beleuchtungsmodul nach Anspruch 6 oder 7, **dadurch gekennzeichnet, dass** die Strukturierungsmittel (15) der Strukturplatte (13) mindestens eins von Folgendem aufweisen: eine oder mehrere Farbschichten variabler Opazität, einen Durchfärbungsgradienten, einen gekrümmten Diopter, der eine Linse bildet, ein oder mehrere Interferenzgitter.

10. Beleuchtungsmodul nach einem der Ansprüche 6 bis 9, **dadurch gekennzeichnet, dass** der Reflektor (11) ein abgeschnittener parabolischer Reflektor ist.

11. Verfahren zur Kalibrierung von Beleuchtungsmodulen einer Kraftfahrzeug-Fahrgastzelle für ein Beobachtungmodul für eine Fahrgastzelle eines Fahrzeugs, aufweisend:
- eine Kamera (101),
- zwei Beleuchtungsmodule (103a, 103b), die jeweils einen Teilbereich eines Sichtfelds der Kamera (101) beleuchten,
wobei die Beleuchtungsmodule (103a, 103b) jeweils einen eigenen Bereich (*E*₁, *E*₂) des Sichtfelds der Kamera (101) und alle beide einen gemeinsamen Abdeckungsbereich (*E*_{1∩2}) des Sichtfelds, der sich zwischen den eigenen Bereichen (*E*₁, *E*₂) befindet, beleuchten, **dadurch gekennzeichnet, dass** die Beleuchtungsmodule (103a, 103b) jeweils Folgendes erzeugen:
- eine gleichförmige Beleuchtung auf einem Referenzwert (*E*₀), der den zwei Beleuchtungsmodulen (103a, 103b) gemein ist, in ihrem eigenen Bereich, und
- eine Beleuchtung, die vom Referenzwert (*E*₀) in ihrem eigenen Bereich (*E*₁, *E*₂) durchgehend auf null im eigenen Bereich (*E*₁, *E*₂) des anderen Beleuchtungsmoduls (103a, 103b) abnimmt,
so dass die kombinierte Beleuchtung der zwei Beleuchtungsmodule (103a, 103b) im gemeinsamen Abdeckungsbereich (*E*_{1∩2}) konstant ist und den Wert des Referenzwerts (*E*₀) aufweist, wobei das Verfahren die folgenden Schritte aufweist:
• Messen der Beleuchtung, die von einem ersten Beleuchtungsmodul (103a) auf einen Teilbereich eines eigenen Bereichs (*E*₁) des ersten Beleuchtungsmoduls (103a) abgegeben wird,
• Messen der Beleuchtung, die vom mindestens einen zweiten Beleuchtungsmodul (103b) auf einen Teilbereich eines eigenen Bereichs (*E₂*) des zweiten Beleuchtungsmoduls (103b) abgegeben wird,
• Verringern oder Erhöhen der Versorgungsleistung der Lichtquelle (9) eines der Beleuchtungsmodule (103a, 103b), wenn eine Beleuchtungsdifferenz (δ), die größer als ein Referenzwert ist, zwischen den Beleuchtungen des ersten und zweiten Beleuchtungsmoduls (103a, 103b) in ihrem eigenen Bereich (*E*₁, *E*₂) festgestellt wird.

## Claims

1. Vehicle passenger-compartment observing module, comprising:
∘ a camera (101),
∘ two lighting modules (103a, 103b), each illuminating one segment of a field of view of the camera (101),
the lighting modules (103a, 103b) each illuminating a specific domain (*E₁, E₂*) of the field of view of the camera (101), and both illuminating a common overlap domain (*E*_{1∩2}) of said field of view, located between the specific domains (*E₁, E₂*), **characterized in that**
the lighting modules (103a, 103b) each generate:
• a uniform irradiance at a reference value (*E*₀) , common to the two lighting modules (103a, 103b), in their specific domain (*E₁, E₂*), and
• an irradiance that continuously decreases from the reference value (*E₀*) in their specific domain (*E₁, E₂*) to zero in the specific domain (*E₁, E₂*) of the other lighting module (103a, 103b),
such that the combined irradiance of the two lighting modules (103a, 103b) in the common overlap domain (*E*_{1∩*2*}) is constant and equal to the reference value (*E*₀) .

2. Observing module according to Claim 1, **characterized in that** the illuminance of each of the lighting modules (103a, 103b) descends linearly from the reference value (*E*₀) to zero over the overlap domain (*E*_{*1*∩*2*}) *.*

3. Observing module according to Claim 1 or 2, **characterized in that** the camera (101) is connected to a control unit (105) configured to isolate in images taken by the camera (101) one or more specific gestures made by a user (*U*) in the field of view of the camera (101).

4. Observing module according to one of the preceding claims, **characterized in that** the camera is connected to a control unit (105) configured to isolate in images taken by the camera (101) one or more indicators of a level of vigilance of a motor-vehicle driver (*U*) in the field of view of the camera (101) .

5. Observing module according to the preceding claim, **characterized in that** the indicators of the level of vigilance of the driver (*U*) comprise at least one among the following: the direction of the gaze of the driver, an open or closed state of the eyes of the driver, how frequently the driver blinks his eyes, how frequently the driver yawns.

6. Lighting module for a motor-vehicle passenger-compartment observing module (100) according to one of Claims 1 to 5, comprising:
∘ a light source (9) that emits a light flux,
∘ a reflector (11) that directs the light flux emitted by the light-emitting diode (9) into a light beam directed toward the field of view of the camera (101),
**characterized in that** it furthermore comprises:
∘ a structuring plate (13), which is at least partially transparent to the light beam, and which is placed on the passage of the conical light beam,
∘ means (15) for structuring the light beam, which means are placed on the structuring plate (13),
the structuring means (15) being configured to modify the spatial distribution of the irradiance of the light beam issued from the reflector (11) by deviation or attenuation so that the irradiance downstream of the structuring plate (13) is uniform at the reference value (*E*₀) over a specific domain (*E₁, E₂*) of the lighting module, and continuously descends from the reference value (*E*₀) in the specific domain (*E₁, E₂*) to zero according to a preset function.

7. Lighting module according to Claim 6, **characterized in that** the irradiance descends linearly from the reference value (*E*₀) in the specific domain (*E₁, E₂*) to zero.

8. Lighting module according to Claim 6 or 7, **characterized in that** the structuring means (15) borne by the structuring plate (13) comprise a matrix array of truncated paraboloids or cones that flare with distance from the light source (9), and that have an upstream surface (17) and a downstream surface (19) the normals of which are parallel to an optical axis (*A*) of the lighting module.

9. Lighting module according to Claim 6 or 7, **characterized in that** the structuring means (15) of the structuring plate (13) comprise at least one among the following: one or more layers of paint of variable opacity, a bulk tint gradient, a curved dioptric interface forming a lens, one or more diffraction gratings.

10. Lighting module according to one of Claims 6 to 9, **characterized in that** the reflector (11) is a truncated parabolic reflector.

11. Method for calibrating lighting modules of a motor-vehicle passenger compartment for a vehicle passenger-compartment observing module, comprising:
∘ a camera (101),
∘ two lighting modules (103a, 103b) that each illuminate one segment of a field of view of the camera (101),
in which the lighting modules (103a, 103b) each illuminate a specific domain (*E₁, E₂*) of the field of view of the camera (101), and both a common overlap domain (*E*_{1∩2}) of said field of view, located between the specific domains (*E₁, E₂*), **characterized in that**
the lighting modules (103a, 103b) each generate:
• a uniform irradiance at a reference value (*E*₀) common to the two lighting modules (103a, 103b), in their specific domain, and
• an irradiance that continuously decreases from the reference value (*E₀*) in their specific domain (*E₁, E₂*) to zero in the specific domain (*E₁, E₂*) of the other lighting module (103a, 103b),
so that the combined irradiance of the two lighting modules (103a, 103b) in the overlap domain (*E_{1∩2}*) is constant and equal to the reference value (*E*₀),
the method comprising the following steps:
• measuring the irradiance emitted by a first lighting module (103a) in one segment of the specific domain (*E₁*) of said first lighting module (103a),
• measuring the irradiance emitted by the at least one second lighting module (103b) in one segment of the specific domain (*E₂*) of said second lighting module (103b),
• decreasing or increasing the supply power of the light source (9) of one of the lighting modules (103a, 103b) when an irradiance difference (δ) larger than a reference value is observed between the irradiances of the first and of the second lighting module (103a, 103b) in their specific domain (*E*₁, *E₂*) *.*
